# EUROPÄISCHE PATENTSCHRIFT

(11) **EP 1 108 277 B1**
(45) Veröffentlichungstag und Bekanntmachung des Hinweises auf die Patenterteilung: **25.06.2003**
(21) Anmeldenummer: 99952415.0
(22) Anmeldetag: 16.08.1999
(51) Int. Cl.: H02G 5/00, H02B 1/056

(54) **SYSTEM ZUR ENERGIE- UND DATENVERTEILUNG IN ENERGIEVERTEILUNGSANLAGEN**
SYSTEM FOR DISTRIBUTING ENERGY AND DATA IN ENERGY DISTRIBUTING FACILITIES
SYSTEME DE DISTRIBUTION D'ENERGIE ET DE DONNEES DANS DES INSTALLATIONS DE DISTRIBUTION D'ENERGIE

(30) Priorität: 28.08.1998 DE 19839288
(43) Veröffentlichungstag der Anmeldung: 20.06.2001
(73) Patentinhaber: SIEMENS AKTIENGESELLSCHAFT, 80333 München (DE)
(72) Erfinder: MAIER, Reinhard, D-91074 Herzogenaurach (DE)
(86) Internationale Anmeldenummer: DE9902563
(87) Internationale Veröffentlichungsnummer: WO00013276

(56) Entgegenhaltungen:
- WO-A-96/15577
- US-A- 5 587 890

## Beschreibung

Die Erfindung bezieht sich auf ein System zur Energie- und Datenverteilung in Energieverteilungsanlagen, insbesondere in Schaltschränken. Bei solchen Schaltgeräten ist eine Vielzahl von Schaltgeräten, beispielsweise elektrische Schütze, vorhanden, die elektrisch kontaktiert werden.

Elektrische Energie wird durch zentrale und dezentrale Energieverteilungsanlagen, z.B. Schaltschränke, an die einzelnen Verbraucher, wie z.B. Motoren, verteilt. Im Schaltschrank sind u.a. die zum Schalten dienenden Geräte, z.B. Schütze, angeordnet. Die Schaltgeräte werden auf Hutschienen aufgeschnappt und über ein Adaptersystem mit den versorgenden Stromschienen verbunden. In neueren Schienensystemen sind in zusätzlichen Schienen Bussysteme vorhanden, über welche die Schaltgeräte kommunizieren können. Hutschienen, Stromschienen und Datenschienen sind dabei zeilenförmig im Schaltschrank angebracht. Vertikale Schienen bilden die Verbindungen zu den horizontalen Schienen. Die Abstände der einzelnen Zeilen richten sich nach den größten auf den Schienen angebrachten Schaltgeräten. Werden kleine Geräte aufgeschnappt, wird der vorhandene Platz nicht ausgenutzt.

Aus der DE 44 09 318 C2 ist ein Schaltverteiler zum Ein- und Ausschalten elektrischer Verbraucher bekannt, bei dem ein System zur Energie- und Datenverteilung in Energieverteilungsanlagen realisiert wird, wobei eine Vielzahl von Schaltgeräten in der Verteilungsanlage vorhanden ist. Daneben ist aus der WO 93/07597 A1 ein System zur Energie- und Datenverteilung in Energieverteilungsanlagen bekannt, bei der einzelne Schaltgeräte an einen Powerbus und an einen Datenbus kontaktiert werden. Schließlich ist aus der DE 195 11 350 ein Schienenkanal einer Niederspannungs-Schaltanlage bekannt, bei der ebenfalls ein System zur Energieverteilung in Energieverteilungsanlagen mit einer Vielzahl von Schaltgeräten, die über eine Öffnung eines Schienenkanalsystems kontaktiert werden, vorhanden ist.

Über letzteren Stand der Technik hinaus ist aus der US 5 587 890 A ein System zur Verteilung von elektrischer Energie bekannt, bei der parallele Platten ein Raster mit darin einbringbaren Ausnehmungen aufweisen und in jeder Platte ein bestimmter Bereich im Raster zur Stromführung definiert wird. Entsprechende Bereiche der einzelnen Platten sind über leitfähige verbindungselemente verbunden, so daß problemangepasst eine elektrische Einheit mit Eingängen und Ausgängen zur Stromführung gebildet werden kann. Ganz entsprechend werden in der WO 96/15577 A1 aufeinander stapelbare Platten im bestimmten Muster durch elektrische Verbindungselemente elektrisch miteinander verbunden.

Ausgehend vom Stand der Technik ist es Aufgabe der Erfindung, Schaltgeräten in einer Energieversorgungsanlage - wie sie z.B. durch einen Schaltschrank gebildet wird - Energie zuzuführen und die Schaltgeräte mit Kommunikationseinrichtungen zu verbinden. Die Schaltgeräte sollen einfach montierbar sein, wobei die elektrische Verbindung in einem Arbeitsgang erfolgen und die Schaltgeräte platzsparend angebracht werden sollen.

Die Aufgabe ist erfindungsgemäß durch die Gesamtheit der Merkmale des Patentanspruches 1 gelöst. Weiterbildungen sind durch die abhängigen Ansprüche gekennzeichnet.

Bei der Erfindung ist zur zweidimensionalen Stromverteilung in der Verteilungsanlage eine mehrlagige Versorgungsplatte mit einer Vielzahl von Ausnehmungen, die zur variablen Aufnahme einzelner Schaltgeräte dienen, vorhanden. Dabei sind die Ausnehmungen speziell zur variablen Aufnahme der Schaltgeräte ausgebildet, wozu jeweils zur Energie- und Datenführung ein Finger in die Ausnehmung hineinragt. Ein einzelnes Schaltgerät kann dabei mit den einzelnen Phasenleitungen in einfacher Weise verklingt werden.

Bei der Erfindung bilden die Ausnehmungen vorzugsweise in der Versorgungsplatte ein Raster aus m-Zeilen und n-Spalten. Die Versorgungsplatte besteht zumindest aus mehreren Lagen von mit einem Isolationsmittel gegeneinander isolierten, elektrisch leitfähigen Platten, z.B. aus Kupfer oder Aluminium, für stromführende Leiterlagen.

Besonders vorteilhaft ist bei der Erfindung, daß Energie- und Busleitungen in einem Arbeitsgang kontaktiert werden können, wozu in den Ausnehmungen der Versorgungsplatte kontaktbildende Finger für die einzelnen Anschlüsse der Schaltgeräte vorhanden sind. Die Montage und Herstellung aller elektrischen Verbindungen kann nunmehr mit einer einzigen Schraub- oder Klemmverbindung erfolgen. Somit ergibt sich eine platzsparende Anordnung bei optimaler Packungsdichte der Schaltgeräte, wobei keine Verbindung zwischen den zeilenartigen Schienen entsprechend herkömmlicher Schranktechnik notwendig ist. Es können hohe Ströme bei geringer Stromdichte geführt werden. Nur in den die Schaltgeräte unmittelbar kontaktierenden Kontaktfingern entstehen höhere Stromdichten. Dadurch entsteht eine gute Schirmwirkung der fast geschlossenen Platten, wobei die unterste und oberste Platte z.B. auf Erdpotential (PE) liegen können.

Weitere Einzelheiten und Vorteile der Erfindung ergeben sich aus der nachfolgenden Figurenbeschreibung von Ausführungsbeispielen anhand der Zeichnung in Verbindung mit den Patentansprüchen. Es zeigen jeweils in schematischer Darstellung
- Figur 1: eine Draufsicht auf das System mit einer Versorgungsplatte,
- Figur 2: perspektivisch einen Ausschnitt aus der Versorgungsplatte gemäß Figur 1, mit der die Mehrlagigkeit verdeutlicht wird,
- Figur 3: einen schematischen Schnitt durch die Versorgungsplatte gemäß Figur 1 und
- Figur 4: eine Darstellung der Ankopplung eines Schaltgerätes.

Gleiche bzw. gleichwirkende Teile haben in den Figuren gleiche Bezugszeichen. Die Figuren werden nachfolgend gemeinsam beschrieben.

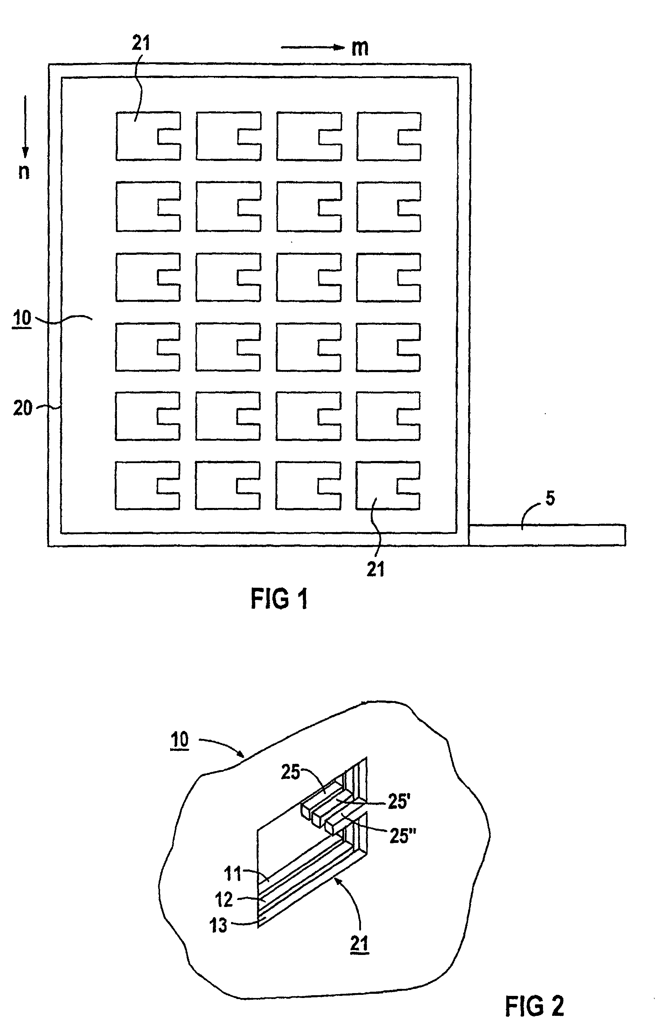

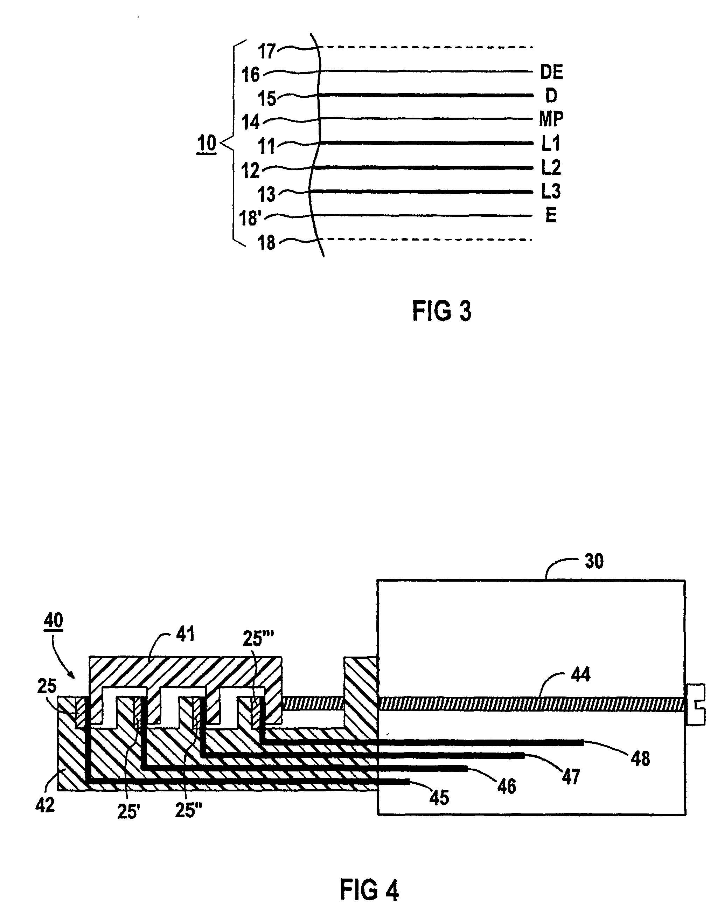

Wesentliches Merkmal eines neuen Systems zur Energie- und Datenverteilung ist, daß die Verteilung zweidimensional, also flächig, erfolgt. Die Figuren 1 und 3 zeigen eine mehrlagige, sog. Versorgungsplatte 10 als wesentliches Element der Erfindung in verschiedenen Darstellungen. Die Versorgungsplatte 10 weist ein Vielzahl von 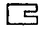 -förmigen Ausschnitten 21 mit fingerbildender Struktur auf, in die Schaltgeräte eingefügt werden können. Mit dem Einfügen erfolgt gleichermaßen die Kontaktierung der einzelnen Phasen.

Die Versorgungsplatte 10 besteht im einzelnen aus mehreren, voneinander mit einem geeigneten Material isolierten, leitenden Platten, z.B. aus Kupfer oder Aluminium. Drei so gebildete Leiterlagen 11, 12, 13 entsprechend Figur 2 kennzeichnen z.B. das versorgende Drehstromnetz mit Phasen L1 bis L3. Zusätzliche Lagen, die in Figur 1 und Figur 2 nicht im einzelnen dargestellt sind, aber anhand Figur 3 verdeutlicht werden, können die Kommunikationsverbindungen bilden.

In Figur 3 ist eine Schichtfolge aus Lagen 11 bis 13 für ein Drehstromnetz mit den Phasen L1, L2, L3, eine Lage 14 für den zugehörigen Mittelpunktsleiter MP mit einer Lage 15 für die Datenübertragung D und einer Lage 16 für dessen Erdung DE kombiniert. Die äußersten Lagen 17, 18 bzw. 18' der Versorgungsplatte 10 sind entweder Isolationslagen oder geerdete Platten, wie beispielhaft mit E_{MP} angedeutet ist. Insbesondere letztere geildete Lage gewährleistet eine gute Abschirmung des Systems. Zwischen den als leitende Platten 11 bis 16 und ggfs. als Erdung 17, 18 ausgebildeten Lagen sind nicht näher bezeichnete Schichten aus Isolationsmaterial angeordnet oder es ist Luft als Isolation vorhanden.

Die Platten 14, 16 für den Mittelpunktsleiter und die Erdung, die äußeren Platten 17,18 bzw. 18' und die Isolationslagen der Versorgungsplatte 10 weisen jeweils in Figur 3 nicht dargestellte fluchtende rechteckige Ausschnitte auf, so daß von den leitenden Platten 11 bis 13 für die Energieversorgung einerseits und von der Lage 14 für die Datenverteilung andererseits freistehende leitende Finger 25, 25', 25'' entsprechend Figur 2 in jeden Ausschnitt 21 ragen.

Zum Anbringen und Kontaktieren eines Schaltgerätes 30 entsprechend Figur 4 in einen der Ausschnitte 21 der Versorgungsplatte 10 gemäß Figur 1 oder 2 wird der Kontaktträger 40 seitlich über die Kontaktfinger 25 der Versorgungsplatte 10 geschoben. Durch Ausführung des Kontaktträgers 40 aus zwei gegeneinander andrückbaren, kammartigen Isolierelementen 41, 42 können in nur einem Arbeitsgang die leitfähigen Platten 11 bis 13, 14 für die Energie- und Datenverteilung der Versorgungsplatte 10 über ihre Kontaktfinger 25 mit den entsprechenden Leitern 45 bis 48 des Schaltgerätes 30 kontaktiert werden. Über eine Längsschraube 44 werden die kammartigen Elemente 41, 42, die Finger 25 und die Leiter 45 bis 48 fixiert. Diese Verbindung dient also gleichermaßen auch der mechanischen Befestigung des Schaltgerätes 30 an der Versorgungsplatte 10.

In Figur 4 ist für die Befestigung der Kontaktierungselemente 41 und 42 eine Schraubverbindung 44 dargestellt. Ebenso kann hier auch eine Klemm- oder Schnappbefestigung mit einer geeigneten Hebelvorrichtung eingesetzt werden. Der Anschluß eines Verbrauchers an das Schaltgerät 30 erfolgt in konventioneller Weise und ist in Figur 4 nicht dargestellt.

Das Rastermaß, in dem m * n Ausschnitte 21 auf der Versorgungsplatte 10 angeordnet sind, richtet sich vorteilhafterweise an den Maßen des kleinsten Schaltgerätes aus. Da insbesondere bei elektronisch gesteuerten Schaltgeräten, die nur minimale Halteleistungen erfordern, die Verlustleistungen sehr klein sind, läßt sich somit eine maximale Packungsdichte im Schaltschrank erzielen.

Die Einspeisung der Energie in die Verteilungsplatte 10 erfolgt zweckmäßigerweise über eine geeignete Schiene 5 an einem umlaufenden Rand 20 der Versorgungsplatte 10. Gegebenenfalls wird der Rand 20 der Versorgungsplatte 10 so verstärkt, daß der Strom zu den Schaltgeräten im wesentlichen radial strömen kann. Damit wird erreicht, daß die Stromdichten in der Versorgungsplatte 10 gering bleiben. Lediglich die Finger 25, 25', 25'' weisen ein höhere Stromdichte auf. Hinzu kommt, daß nicht alle Schaltgeräte gleichzeitig einen hohen Strom führen.

Beim beschriebenen System ist die Verwendung einer mehrlagigen Versorgungsplatte mit Ausschnitten im Rastermaß wesentlich. Durch die Ausbildung des Schaltgerätes mit zugehörigem Kontaktträger können alle elektrischen und mechanischen Verbindungen zur Versorgungsplatte in einem Arbeitsvorgang herstellt werden. Damit ergeben sich erhebliche Vereinfachungen für die Praxis.

## Patentansprüche

1. System zur Energie- und Datenverteilung in Energieverteilungsanlagen, insbesondere in Schaltschränken, mit einer Vielzahl von Schaltgeräten, wobei zur zweidimensionalen Stromverteilung in der Verteilungsanlage (1) eine mehrlagige Versorgungsplatte (10) mit einer Vielzahl von Ausnehmungen (21), die zur variablen Aufnahme einzelner Schaltgeräte (30) dienen, vorhanden ist, wobei jede Ausnehmung einen Verklinkungsmechanismus als einzelne in die Ausnehmung hineinreichenden Finger (25-25") aufweist, der gleichermaßen zur Verklinkung des Schaltgerätes (30) und zur Energie- und Datenführung dient.

2. System nach Anspruch 1, **dadurch gekennzeichnet, daß** die Ausnehmungen (21) in der Versorgungsplatte (10) ein Raster aus m Zeilen und n Spalten bilden.

3. System nach Anspruch 1, **dadurch gekennzeichnet, daß** die Versorgungsplatte (10) zumindest aus mehreren Lagen von durch ein Isolationsmittel gegeneinander isolierten, elektrisch leitfähigen Platten, z.B. aus Kupfer oder Aluminium, für stromführende Leiterlagen (11, 12, 13) besteht.

4. System nach Anspruch 3, **dadurch gekennzeichnet, daß** drei stromführenden Leiterlagen (11, 12, 13) mit einer Leiterlage (14) für den Mittelpunktsleiter (MP) ein die Scbaltgeräte (30) versorgendes Drehstromnetz (L1, L2, L3) definieren.

5. System nach Anspruch 3 oder Anspruch 4, **dadurch gekennzeichnet, daß** wenigstens eine zusätzliche Lage (15, 16; D, DE) aus leitendem Material eine Kommunikationsverbindung bilden.

6. System nach Anspruch 3, wobei die Versorgungsplatte weitere Lagen enthält, **dadurch gekennzeichnet, daß** die äußersten Lagen (17, 18, 18') der Versorgungsplatte (10) entweder Isolationsplatten oder geerdete Platten, die eine Abschirmung bilden, sind.

7. System nach Anspruch 6, **dadurch gekennzeichnet, daß** die Mittelpunkts, Erdungs- und/oder Isolationslagen (14, 16, 17, 18, 18') der Versorgungsplatte (10) rechteckige Ausschnitte aufweisen, so daß freistehende Finger (25) der leitenden Platten (11, 13, 15) in die Ausschnitte (21) ragen.

8. System nach Anspruch 7, **dadurch gekennzeichnet, daß** die Ausschnitte (21) in den Leiterlagen (11, 13, 15) jochförmig mit Vorsprung ausgebildet sind, und den freistehenden Finger (25-25'') bilden.

9. System nach Anspruch 1, **dadurch gekennzeichnet, daß** zum Einbringen eines Schaltgerätes (30) in die Ausschnitte (21) der Versorgungsplatte (10) ein Kontaktträger (40, 41, 42) seitlich über die Kontaktfinger (25-25") schiebbar ist.

10. System nach Anspruch 9, **dadurch gekennzeichnet, daß** der Kontaktträger (40) mit zwei zueinander andrückbaren, kammartigen Isolierstücken (41, 42) ausgeführt ist, so daß alle Leiterlagen (11-14) der Versorgungsplatte (10) mit entsprechenden Leitern (45-48) des zugeordneten Schaltgerätes (30) in nur einem Arbeitsgang verbind- und kontaktierbar sind.

11. System nach Anspruch 10, **dadurch gekennzeichnet, daß** die Verbindung gleichermaßen der mechanischen Befestigung des Schaltgerätes (30) an der Versorgungsplatte (10) dient.

12. System nach Anspruch 11, **dadurch gekennzeichnet, daß** zur Fixierung der Befestigungselemente (41, 42) eine Schraubverbindung (44) oder eine Klemm- bzw. Schnappbefestigung mit einer Hebelvorrichtung eingesetzt werden.

13. System nach Anspruch 1, **dadurch gekennzeichnet, daß** das Rastermaß, in dem die Ausschnitte (21) in der Versorgungsplatte (10) angeordnet sind, an den Maßen des kleinsten, verwendeten Schaltgerätes (30) ausgerichtet ist.

## Claims

1. System for power and data distribution in power distribution systems, in particular in switchgear cabinets, having a large number of switching devices, whereby a multilayer supply board (10) having a number of recesses (21) which are used for variable accommodation of individual switching devices (30) is provided for two-dimensional power distribution in the distribution system (1), whereby each recess has a latching mechanism in the form of individual fingers (25-25") which extend into the recess and are at the same time used for latching the switching device (30) and for carrying power and data.

2. System according to Claim 1, **characterised in that** the recesses (21) form an array with m rows and n columns in the supply board (10).

3. System according to Claim 1, **characterised in that** the supply board (10) comprises at least a number of layers of electrically conductive boards which are insulated from one another by insulation means and are composed, for example, of copper or aluminium, for current-carrying conductor layers (11, 12, 13).

4. System according to Claim 3, **characterised in that** three current-carrying conductor layers (11, 12, 13) together with a conductor layer (14) for the neutral point conductor (MP) define a three-phase network (L1, L2, L3) supplying the switching devices (30).

5. System according to Claim 3 or Claim 4, **characterised in that** at least one additional layer (15, 16; D, DE) composed of conductive material forms a communication connection.

6. System according to Claim 3, with the supply board containing further layers, **characterised in that** the outermost layers (17, 18, 18') of the supply board (10) are either insulation boards or earthed boards which form shielding.

7. System according to Claim 6, **characterised in that** the neutral point, earthing and/or insulation layers (14, 16, 17, 18, 18') of the supply board (10) have rectangular cutouts, so that free-standing fingers (25) on the conductive boards (11, 13, 15) project into the cutouts (21).

8. System according to Claim 7, **characterised in that** the cutouts (21) in the conductor layers (11, 13, 15) are formed as yokes with a projection and form the free-standing finger (25-25").

9. System according to Claim 1, **characterised in that** a contact support (40, 41, 42) can be pushed laterally over the contact fingers (25-25") in order to fit a switching device (30) into the cutouts (21) in the supply board (10).

10. System according to Claim 9, **characterised in that** the contact support (40) is designed with two comb-like insulating pieces (41, 42) which can be pressed against one another, so that all the conductor layers (11-14) in the supply board (10) can be connected to and can make contact with corresponding conductors (45-48) in the associated switching device (30) in just one process.

11. System according to Claim 10, **characterised in that** the connection is at the same time used for mechanical mounting of the switching device (30) on the supply board (10).

12. System according to Claim 11, **characterised in that** a screw connection (44) or a clamping or snap-action attachment with a lever apparatus is used for fixing the attachment elements (41, 42).

13. System according to Claim 1, **characterised in that** the array size in which the cutouts (21) are arranged in the supply board (10) is matched to the dimensions of the smallest switching device (30) used.

## Revendications

1. Système pour la distribution d'énergie et de données dans des installations de distribution d'énergie, en particulier des armoires de commutation, comprenant une pluralité d'organes de manoeuvre, dans lequel il y a une plaque d'alimentation multicouche (10) comportant un grand nombre d'évidements (21), qui servent à recevoir de façon variable des organes de manoeuvre(30), en vue de la distribution bidimensionnelle du courant dans l'installation de distribution (1), chaque évidement comportant un mécanisme d'encliquetage se présentant sous la forme de doigt individuel (25 à 25") saillant dans l'évidement, lequel doigt sert également à encliqueter l'organe de manoeuvre(30) et à transmettre de l'énergie et des données.

2. Système selon la revendication 1, **caractérisé en ce que** les évidements (21) ménagés dans la plaque d'alimentation (10) forment une trame constituée de m lignes et de n colonnes.

3. Système selon la revendication 1, **caractérisé en ce que** la plaque d'alimentation (10) se compose au moins de plusieurs couches de plaques électroconductrices, par exemple en cuivre ou en aluminium, qui sont isolées les unes des autres par un isolant et qui sont destinées à servir de couches conductrices de courant (11, 12, 13).

4. Système selon la revendication 3, **caractérisé en ce que** trois couches conductrices de courant (11, 12, 13) définissent avec une couche conductrice (14) pour le neutre (MP) un réseau de courant triphasé (L1, L2, L3) alimentant les organes de manoeuvre(30).

5. Système selon la revendication 3 ou 4, **caractérisé en ce que** au moins une couche supplémentaire (15, 16 ; D, DE) en matériau conducteur forme une liaison de communication.

6. Système selon la revendication 3, dans lequel la plaque d'alimentation comporte d'autres couches, **caractérisé en ce que** les couches les plus extérieures (17, 18, 18') de la plaque d'alimentation (10) sont des plaques isolantes ou des plaques mises à la terre qui forment un blindage.

7. Système selon la revendication 6, **caractérisé en ce que** les couches de neutre, de terre et/ou isolantes (14, 16, 17, 18, 18') de la plaque d'alimentation (10) comportent des découpures rectangulaires de sorte que des doigts libres (25) des plaques conductrices (11, 13, 15) font saillie dans les découpures (21).

8. Système selon la revendication 7, **caractérisé en ce que** les découpures (21) dans les couches conductrices (11, 13, 15) sont conformées en carcan doté de saillie et forment le doigt détaché (25 à 25").

9. Système selon la revendication 1, **caractérisé en ce qu'**un support de contact (40, 41, 42) est mobile latéralement au-dessus du doigt de contact (25 à 25") dans le but d'insérer un organe de manoeuvre(30) dans les découpures (21) de la plaque d'alimentation (10).

10. Système selon la revendication 9, **caractérisé en ce que** le support de contact (40) est conformé en ayant deux pièces isolantes (41, 42) en forme de peigne qui peuvent être poussées l'une vers l'autre de sorte que toutes les couches conductrices (11 à 14) de la plaque d'alimentation (10) peuvent venir en contact avec les conducteurs correspondants (45 à 48) de l'organe de manoeuvre associé (30) et être reliés à ceux-ci en une seule phase opératoire.

11. Système selon la revendication 10, **caractérisé en ce que** la liaison sert également à fixer mécaniquement l'organe de manoeuvre (30) à la plaque d'alimentation (10).

12. Système selon la revendication 11, **caractérisé en ce qu'**une liaison par vis (44) ou une fixation par serrage ou encliquetage sont utilisées avec un dispositif à levier pour immobiliser les éléments de fixation (41, 42).

13. Dispositif selon la revendication 1, **caractérisé en ce que** la dimension de trame avec laquelle les découpures (21) sont agencées dans la plaque d'alimentation correspond aux dimensions du plus petit organe de manoeuvre qui est utilisé (30).
